# EUROPEAN PATENT SPECIFICATION

(11) **EP 1 337 395 B1**
(45) Date of publication and mention of the grant of the patent: **23.08.2006**
(21) Application number: 01993179.9
(22) Date of filing: 29.11.2001
(51) Int. Cl.: B29D 11/00, G02B 5/23, B32B 33/00

(54) **PHOTOCHROMIC ARTICLES AND METHODS FOR MAKING THEM**
PHOTOCHROMISCHE ARTIKEL UND VERFAHREN ZU IHRER HERSTELLUNG
ARTICLES PHOTOCHROMES ET LEURS PROCEDES DE FABRICATION

(30) Priority: 29.11.2000 US 250097 P
(43) Date of publication of application: 27.08.2003
(73) Proprietor: ZMS, LLC, Emeryville, CA 94608 (US)
(72) Inventor: FAN, Shaobin, Castro Valley, CA 94546 (US); HOUSTON, Michael, R., Deerfield, Il 60015 (US); SOANE, David, S., Piedmont, CA 94610 (US)
(74) Representative: Campbell, Patrick John Henry
(86) International application number: PCT/US2001/044628
(87) International publication number: WO 2002/057070

(56) References cited:
- EP-A- 0 846 708
- WO-A-00/55653
- US-A- 5 405 557
- US-A- 5 523 030
- US-A- 6 034 193
- US-A- 6 068 797

## Description

### FIELD OF THE INVENTION

This invention is related to the field of photochromic polymer articles with optical quality and to methods for manufacturing such articles inexpensively and quickly. More specifically, the articles may be lens blanks or finished lenses to produce photochromic eyeglasses, ophthalmic lenses, sunglasses and safety goggles.

### BACKGROUND OF THE INVENTION

Photochromism is a phenomenon in which a color change is observed between inactive and active states. The activation is induced by radiation and the radiation source can be ultraviolet, visible light, infrared and the like. Numerous applications exist based on photochromic properties. One of them is the photochromic lens, including eyeglasses, sunglasses, safety goggles, and other ophthalmic lenses in which photochromic compounds are embodied. Early photochromic lenses were glass-based, with silver halide added to create a photochromic response. Meanwhile, organic photochromic compounds were synthesized and their performance has been improved drastically. Many of the compounds have been used in polymeric systems to generate a photochromic response. Since polymer lenses have advantages over glass lenses in light weight and high impact strength, they have gradually replaced glass lenses and become the standard lens material. On the other hand, photochromic lenses have additional requirements of quick darkening and lighting rates, and more importantly, photochromic stability during service. Therefore, optimal performance strongly depends on the polymer/photochromic dye combination and the manufacturing method.

In the current art of manufacturing photochromic lenses, a widely applied method is to produce a clear lens or lens blank first; the lens or lens blank is then immersed in a bath containing photochromic dye. The dye solution is often heated to speed up the transfer of the dye into the lens or lens blank. An alternative is by thermal diffusion of photochromic dye into the lens or lens blank from an organic or polymer host, as described in U.S. Pat. Nos. 5,130,353 and 5,185,390. However, these processes suffer problems, including long operation time and limited penetration depth of the photochromic dye. Typically, only a surface layer in the range of 100 - 200 microns has significant dye content, and the rest is essentially free of photochromic response. Thus, the light transmission in the activated state, as well as the darkening and lighting rates, are not optimal. More importantly, the photochromic property will be severely affected or even disappear once the dye in the thin surface layer is degraded.

There are other methods and materials disclosed to produce photochromic lenses. One method is to apply a coating layer with photochromic dye on either the front or the back surface of a substrate or a lens pre-form, or sandwiched between two thin lenses or lens pre-forms, as described in U.S. Pat. Nos., 5,531,940 and 6,068,797. Another method describes a lens having two or more layered sections of either thermosetting material (U.S. Pat No. 5,405,557) or thermoplastic material (U.S. Pat No. 5,523,030) in which at least one of the layered sections has an active photochromic material present.

A significant advance has been made in recent years with the discovery that for certain monomer(s)/photochromic dye formulations with properly chosen initiator(s), the curing process has little or no adverse effect on photochromic property. Thus, these resins can be cured by ultraviolet radiation or heating, or a combination of both. Such materials include those disclosed in U.S. Pat. No. 5,873,511 or 6,034,193 by Corning Inc., as well as U.S. Pat. No. 5,981,634 by PPG Industries. One example is Sun Sensor®, a photochromic liquid resin sold by Corning Inc. The photochromic lenses made from these materials, upon curing, may be darker in the activated state, quicker in darkening and lighting and last longer compared to the lenses made by traditional heat diffusion methods, since the photochromic dye is distributed uniformly within the entire lens. As a result, these materials appear to be enjoying commercial success and gaining market share rapidly.

It is a common practice for a lens manufacturer to produce lens blanks and sell them to optical laboratories for subsequent grinding, edging, and polishing to make final lenses. This is also the case for photochromic lenses, in which photochromic lens blanks are made first., Such a lens blank is often manufactured by a casting process where a liquid resin is utilized. For those using a material mixed with photochromic dye, such as Sun Sensor®, the lens blank is made using the liquid photochromic resin and contains photochromic dye across the entire thickness, according to the current art. It is estimated that 70% to 80% of the material will be removed during grinding, polishing, and edging operations. This results in significant waste and increases material cost since photochromic resins are typically very expensive.

One other problem is that photochromic dyes are often sensitive to UV radiation, and thermal heating is frequently needed to cure the part completely.

Therefore, there is a need to manufacture photochromic articles, such as lens blanks, inexpensively and quickly. It would be preferable to develop methods which can apply to current material and equipment with little or minor change or modification. Furthermore, it would be also preferable that the manufacturing methods are flexible to be easily adapted for new materials.

US-A-6068797 describes a method of preparing a shaped article having a photochromic coating thereon. WO 00/55653 describes a process for preparing an article with exact dimensions, the process relying on the use of polymerisable compositions comprised the mixture of a reactive plasticizer and an initiator, optionally also including a dead polymer, which compositions are semi-solid-like and induce little shrinkage upon curing as a result of their partially polymerized nature prior to processing.

### SUMMARY OF THE INVENTION

The present invention concerns a composite photochromic article and a method for molding a photochromic article as defined by the appended claims.

Novel methods for manufacturing photochromic articles inexpensively and/or quickly, such as photochromic lens blanks for eyeglasses, sunglasses, safety goggles, and the like are described. These methods provide lens blanks that can be used to produce final lenses with photochromic dye uniformly over a layer much thicker than the 100-200 microns achieved by current diffusion techniques, and preferably across all or most of the final lens thickness after the lens blank has been ground and finished. In addition, there is no limitation in materials that can be used. These methods offer advantages equally to commercial photochromic lens materials including Sun Sensor® and the like, as well as to formulated materials and others. This is unique in that it is an extremely economic process suitable to mass manufacture. The methods may be adopted with little or minor change or modification of traditional lens manufacturing equipment, which is often a major concern for a lens manufacturer in considering new materials and processes.

Parts, objects, and artides produced by the methods are also described. The articles of the invention have at least two layers. These layers are made of either the same or different materials and in addition, at least one of the layers is loaded with photochromic dye. Further, at least one of the layers comprises a reactive plasticizer and a dead polymer, a dead polymer being a generally non-reactive polymer that is at least 95% polymerized. The semi-solid polymerizable material" as disclosed herein is a semi-solid material that comprises at least one reactive plasticizer and an initiator, and, when used as the photochromic layer, it further comprises a photochromic dye, and/or, when used as the dead polymer layer, it further comprises at least one dead polymer. The remaining layer(s) may be formed from liquid resins or additional semi-solid polymerizable materials. The liquid resin or semi-solid polymerizable material can be polymerized or cured by exposure to a source of polymerizing energy, such as thermal heating, UV, or a combination of both, to form an integral entity; that is, the layers will not separate during normal operations such as handling, curing, thermal treatment, grinding and polishing. The articles so prepared are of optical quality and no optical aberration can be discerned. They can be optically transparent or optionally tinted in the normal condition and dark after exposure to a strong radiation source. The semi-solid polymerizable materials for use as at least one of the layers of the composite article are advantageously designed to exhibit low shrinkage upon cure compared to curable liquid formulations known in the art. Use of the semi-solid materials results in excellent adhesion of the layers while minimizing the diffusion of photochromic compounds into an adjoining layer.

Generally, the method of the present invention for molding a composite photochromic article having two or more layered sections comprises forming a mold cavity from a first mold half; loading the mold cavity with a first material; optionally, partially curing the first material when the first material is a liquid; loading the mold cavity with a second material such that the second material is in contact with the first material; placing a second mold half in contact with the second material; and curing the first and second materials to form an integral composite article; wherein at least one of the first and second materials is a semi-solid polymerizable material comprising a reactive plasticizer, an initiator and a dead polymer; and wherein one of the first and second materials is loaded with at least one photochromic dye. The layered section containing the photochromic dye has an edge thickness in the range of approximately 0.1 to 10 mm. The center thickness of the photochromic layer is determined by the chosen curvature of the mold. The final composite photochromic part can be of any shape or size, and is preferably in the form of a lens blank. Said lens blank has only a layer containing photochromic dye and therefore is cost-effective and inexpensive, compared to the conventional lens blank which contains photochromic dye in the entire article. It may also be appreciated that this method may be applied to either commercial photochromic materials or formulated materials, thus requiring little change or addition in existing equipment.

A first method includes the steps of placing a front layer material containing at least one photochromic dye into a front mold half having a desired surface geometry. Optionally, a first back mold half may also be included in the mold assembly to form a mold cavity into which the front layer material is placed. When a liquid resin is used as the front layer material, it can be partially polymerized after addition into the mold cavity to transform the resin into a highly viscous liquid, a gel, or a semi-solid. Alternatively, the front layer material can be a semi-solid polymerizable material comprising a reactive plasticizer, an initiator, a dead polymer, and a photochromic dye. The first back mold, if present, is then removed and subsequently, a layer of a back layer material is added on top of the first layer to form an integral semi-solid/composite sandwich. Such a back layer material can be a liquid resin (if the front layer material was initially a semi-solid polymerizable material) or it can be a semi-solid polymarizable material. In either case, it contains no photochromic additives. A subsequent back mold half having a desired surface geometry is then placed in contact with the back layer material, and the composite sandwich is exposed to a source of polymerizing energy (such as thermal heating or UV radiation, or a combination of both), which simultaneously cures and hardens the materials. Optionally, the subsequent back mold half may be placed prior to addition of the back layer material, the subsequent back mold and the first material defining a subsequent mold cavity into which the back layer material is placed, after which the composite sandwich is cured.

The process is optionally modified to include a thin interfacial layer. Such a process is particularly useful in cases when a liquid resin is applied as the first layer material and such a resin cannot be prepolymerized to high viscosity due to the consideration of mold filling, sensitivity of the photochromic dye to UV radiation, and other practical issues. The steps include placing a liquid resin with a photochromic dye into a front mold assembly having a desired surface geometry. The liquid resin may or may not contain a photo initiator; however, if a photo initiator is present in this layer, it will preferably be present at a low concentration. A thin interfacial layer, in which at least one photo initiator is mixed, is formed by placing a liquid resin on a surface of the semi-solid pre-form or on the top of the photochromic liquid resin. Said layer will be between about 1 and 500 microns thick, preferably between about 10 and 200 microns thick. The thin layer is subjected to a source of polymerizing energy, such as UV radiation, for a short time to increase its viscosity to form a barrier to limit diffusion and migration of photochromic dye from the first layer. Then, a second, back layer material without photochromic dye, which material may be a liquid or a semi-solid, is filled to the predetermined level to give a semi-solid/composite sandwich. A back mold having a desired surface geometry is placed in contact with the second layer material, and the composite sandwich is subsequently cured. The resulting photochromic composite article is inexpensive and easy to manufacture, with the additional advantage that the photochromic layer has less exposure to UV radiation during the manufacturing process.

The process of the first method is optionally carried out in reverse. That is, it is altered to select a back mold, the cavity of which is then partially filled with a material free of photochromic dye to form a back layer. If the back layer material is a liquid, a gasket is included in the mold assembly and the liquid material can be cured to a higher viscosity, a gel, or semi-solid state by blanket UV radiation. In principle, it can even be cured to solid state as long as shrinkage is under control and optical aberrations can be avoided. This is due to the fact that the resin is free of photochromic dye and the degradation of dye is not a concern. If the liquid resin layer is cured into a semi-solid or solid state, it may function as a back mold in the subsequent steps. On the other hand, when the back layer material is initially in a semi-solid polymerizable state, curing at this stage is optional. In the next step, a front mold is selected and a predetermined amount of a front layer material is added, in which at least one photochromic dye is mixed. The front layer may be a liquid (if the back layer was initially a semi-solid polymerizable material) or it may be a semi-solid polymerizable material. The semi-finished back layer and the front mold containing the photochromic dye are then combined. This may be accomplished by turning over and pressing the semi-finished back mold and back layer against the front layer. The assembled semi-solid/composite sandwich is then cured. In any case, a basic requirement is that a good bonding between the back layer and the front layer must be ensured without causing visually observable optical distortions.

The method optionally includes the steps of assembling a front mold half and a gasket, subsequently adding a back layer material into the cavity and squeezing the material with a back mold half having a desired geometry. The back layer material can be either a liquid resin or semi-solid material and is free of photochromic dye, so that UV blanket curing can be conducted without degradation of the dye. The front mold is then removed. When the back layer material is a liquid resin, it may be cured to a semi-solid or solid state so that the front mold can be removed without deforming the semi-finished back layer. Subsequently, the front mold half is reassembled with a mold having a desired surface geometry, and a front layer of material with photochromic dye is added. The front layer material may be a liquid (if the back layer material was initially a semi-solid polymerizable material) or it may be a semi-solid polymerizable material. The semi-finished back layer is then pressed against the front layer. Finally, the entire semi-solid/composite sandwich is cured to give the composite photochromic article.

mold assembly consisting of a front mold, a gasket and a back mold is optionally utilized, similar to the previous paragraph. The difference is that the front layer containing a photochromic dye will be fabricated first. Next, the back mold is removed, the material (without photochromic dye) for the back layer is added, the back mold is reapplied so that the two layers are pressed together, and they are cured.

It is understood that in all of the above methods, a gasket is utilized as part of the mold assembly when a liquid resin is present as one of the layers. When the layer material is initially a semi-solid, a gasket is not necessary, as the semi-solid material will remain in the molding without leaking out.

### DETAILED DESCRIPTION OF THE INVENTION

The terms "a" and "an" as used herein and in the appended claims means "one or more".

The terms "semi-solid" and "semi-solid-like" as used herein and in the appended claims mean that, in essence, the polymerizable composition is a rubbery, taffy-like mass at sub-ambient, ambient, or elevated temperatures. Preferably the semi-solid mass has a sufficiently high viscosity to prevent dripping at ambient temperatures and pressures or below, but is malleable and can easily deform and conform to mold surfaces if the mold cavity is slightly heated or as a result of pressure exerted by pressing the two mold halves together, or a combination of both heat and pressure. In a presently preferred embodiment, the viscosity will be greater than about 25,000 centipoise and preferably greater than 50,000 centipoise at the temperature at which the material is to be handled (e.g., inserted into a mold cavity). Such compositions may be handled, stored, and easily inserted into the mold assembly as a non-free-flowing material, yet are easily deformed and shaped into the desired geometry with lower temperatures and/or less pressure than that required to perform the same operation on a fully polymerized, unplasticized dead polymer.

The composite photochromic optical articles of the present invention comprise two or more layers permanently bonded together, at least one layer of which is a cured resin formed from a semi-solid polymerizable material comprising a dead polymer and a reactive plasticizer. The other layer(s) may also be formed from a semi-solid polymerizable material or alternately, from a liquid resin. Such semi-solid polymerizable materials are disclosed and discussed in International Publication WO 00/17675. Use of at least one layer of this semi-solid polymerizable material reduces shrinkage of the composite article upon curing, provides good adhesion of the layers, and minimizes the diffusion of photochromic dyes from the layer that contains them into the adjacent layer(s).

It is only necessary for photochromic dye to be present in one of the layers of the article, thus reducing or eliminating the waste and material costs inherent in lens blanks containing photochromic dye across their entire thickness. The edge thickness of the layer may be in the range of 0.1 - 10 mm, preferably in the range of 0.5 - 5 mm, or more preferably in the range of 0.5 - 2 mm. The exact thickness is determined by the condition that a final lens made from such a blank will contain the photochromic dye across the entire diameter of the lens, and that the layer containing the photochromic dye has a sufficient thickness after finishing to produce the desired photochromic behavior. To ensure the optimized performance, the resin and photochromic dye formulation should be carefully examined and tested, which processes may be carried out without undue experimentation by those of skill in the art.

The methods disclosed in this invention are related to the manufacture of photochromic articles inexpensively and quickly, and in particular, to the manufacture of lens blanks. The lens blanks may be used to make eyeglasses, sunglasses, safety goggles, and other ophthalmic lenses in which photochromic compounds are embodied. The lenses or glasses in their finished state can be spherical or aspherical in geometry and may be monofocal, bifocal, multifocal, or progressive in optical characteristics. In particular, the photochromic article can be a lens blank having spherical or aspherical geometries and monofocal, bifocal, multifocal, or progressive optical characteristics. The back surface of the blank is often not important and can optionally be planar, spherical or aspherical, depending on the design and requirements. Furthermore, the photochromic dye in the lens will be present in sufficient thickness. The thickness is chosen to ensure the finished lens having photochromic dye distributed across the diameter of the whole lens. Thus, the finished lens will typically have preferred features such as quicker response time, a darker activated state, and better stability compared to a traditional photochromic lens.

A front layer material containing photochromic dye and a back layer material free of photochromic dye (at least one of which layers is a semi-solid polymerizable material comprising a dead polymer, a reactive plasticizer and an initiator, and when used as the photochromic layer, further comprises a photochromic dye) are placed in contact with each other in a mold. The resulting semi-solid/composite sandwich is compressed between the molds and exposed to a source of polymerizing energy (such as UV light and/or temperature; x-rays; e-beam; gamma radiation; microwave radiation; or ionic initiation) to cure the materials and give a composite article having a photochromic layer.

While the discussion herein, for purposes of illustration, refers to two layers in forming the composite article of the invention, it will be understood that the composite articles and the methods for making them according to the invention can utilize more than two layers and such multiple layers are included within the scope of the present invention. Thus, for instance, a composite article may be prepared according to the invention that has three integral layers, wherein the front and back layers are formed from a liquid resin and the middle layer is formed from a semi-solid polymerizable material or, alternatively, the front and back layers are formed from a semi-solid material and the middle layer is formed from a liquid resin. Other combinations are, of course, possible and are encompassed by the invention.

The basic mold for use with this type of operation comprises two glass molds, such as those made from Crown glass, BK-7, and the like. However, there is no limit on the mold material; in particular, any material that has sufficient mechanical strength and desired surface profile can be used as the mold material. The front mold is typically the mold whose concave surface is in contact with the casting resin. On the other hand, the back mold is the one whose convex surface is facing the casting resin. When a liquid resin is used, a gasket having sufficient rigidity to hold the resin within the cavity and provide good sealing to prevent the leaking of the resin is included in the mold assembly. When the resin is initially a semi-solid, a gasket is not necessary, as the semi-solid material will remain in the molding without leaking out.

In general, the liquid resin useful in the present invention is a thermosetting composition that can be cured by UV or thermally. Some examples include epoxies, melamines, styrenes, urethanes, acrylates, acrylated epoxies, acrylated urethanes, etc. The reactive functional group can be acrylate, methacrylate, acrylic anhydride, acrylamide, vinyl, vinyl ether, vinyl ester, vinyl halide, vinyl silane, vinyl siloxane, methacrylated silicones, vinyl heterocycles, diene, allyl, and the like. Other less known but polymerizable functional groups can be investigated, such as epoxies (with hardeners) and urethanes (reaction between isocyanates and alcohols).

In principle, any monomers may be used as ingredients to formulate the liquid resin. There are hundreds to thousands of commercially available monomers and we will only name a few of them. For example, mono-functional entities include, but are not limited to: butyl acrylate, isooctyl acrylate, hexadecyl acrylate, stearyl acrylate, isobornyl acrylate, vinyl benzolate, tetrahydrofurfuryl acrylate (or methacrylate), caprolactone acrylate, cyclohexyl acrylate, benzyl acrylate, hydroxypropyl acrylate, polyethylene glycol acrylate, and the like. Bi-functional entities include, but are not limited to: polyethyleneglycol diacrylate, polypropyleneglycol diacrylate, hexanediol diacrylate, Photomer 4200 (from Henkel), polybutadiene diacrylate (or dimethyacrylate), Ebecryl 8402 (from Radcure), bisphenol A diacrylate, and ethoxylated (or propoxylated) bisphenol A diacrylate. Tri-functional and multi-functional entities include, but are not limited to: trimethylolpropane triacrylate (and its ethoxylated or propoxylated derivatives), pentaerythritol tetraacrylate (and its ethoxylated or propoxylated derivatives), Photomer 6173 (a proprietary acrylated oligomer of multi functionality, from Henkel), and a whole host of aliphatic and aromatic acrylated oligomers from Sartomer (the SR series), Radcure (the Ebecryl series), and Henkel (the Photomer series). In addtion to acrylate chemistry, styrene, substituted styrenes (such as, for example, chlorostyrene and methystyrene), and other vinyl derivatives, vinyl ethers, and allyl-containing compounds can be used.

A semi-solid polymerizable material useful in the present invention comprises at least one dead polymer (or a dead polymer mixture) with at least one small-molecule species, which small molecule species is itself polymerizable or crosslinkable. This small-molecule species is referred to herein as a "reactive plasticizer".

The term "dead polymer" as used herein and in the claims refers to a substantially fully polymerized, generally non-reactive polymer. The term "substantially fully polymerized", as used herein and in the appended claims, refers to a polymer that is at least 95% polymerized and is preferably at least 98% polymerized. When certain polymer chemistries are used, the dead polymer itself may also react with a reactive plasticizer, even if the dead polymer does not have unsaturated entities within or attached to the chain. The dead polymer may be linear or branched, homopolymer or copolymer. In the case of a copolymer, the sequence distribution may be random or blocky. The block copolymers may be tapered, multi-arm, comb-shaped or star-shaped. Diblock, triblock or multi-block structures all fall within the scope of this invention.

The dead polymers may be divided into two categories, based on the type of polymer utilized in the process. One category begins with standard thermoplastics as the dead polymer. These include, but are not limited to, polystyrene, polymethylmethacrylate, ABS, polyvinyl chloride, polyvinylidene chloride, polycarbonate, polysulfone, polysiloxane, polysilane, polyvinylpyrrolidone, polycaprolactone, and polyetherimide, for example. The thermoplastics may optionally have a small amount of reactive entities attached (copolymerized, grafted, or otherwise incorporated) to the polymer backbone to promote crosslinking upon cure. They may be classified as engineering thermoplastics, or they may be biodegradable. These examples are not meant to limit the scope of compositions possible for use in the practice of the current invention, but merely to illustrate the broad selection of dead polymer chemistries permitted under the present disclosure. Reactive plasticizers may be mixed with a thermoplastic polymer such as those listed above to give a semi-solid-like composition that can be easily molded into dimensionally precise objects. Upon curing, the dimensional stability of the object is locked in to give exact three-dimensional shapes or precise surface features. Thermoplastic polymers may be chosen in order to give optical clarity, high index of refraction, low birefringence, exceptional impact resistance, good thermal stability, high oxygen permeability, UV transparency or blocking, low cost, or a combination of these properties in the finished, molded object.

The other category utilizes "thermoplastic elastomers" as the dead polymer. An exemplary thermoplastic elastomer is a tri-block copolymer of the general structure "A-B-A", where A is a thermoplastic rigid polymer (i.e., having glass transition temperature above ambient) and B is an elastomeric (rubbery) polymer (glass transition temperature below ambient). In the pure state, ABA forms a microphase-separated morphology. This morphology consists of rigid glassy polymer regions (A) connected to and surrounded by rubbery chains (B). Under certain compositional and processing conditions, the morphology is such that the relevant domain size is smaller than the wavelength of visible light. Hence, parts made of such ABA copolymers can be transparent or at worst translucent. Thermoplastic elastomers, without vulcanization, have rubber-like properties similar to those of conventional rubber vulcanizates, but flow as thermoplastics at temperatures above the order-disorder transition temperature. Melt behavior with respect to shear and elongation is similar to that of conventional thermoplastics. Commercially important thermoplastic elastomers are exemplified by SBS, SIS, and SEBS, where S is polystyrene, B is polybutadiene, I is polyisoprene, and EB is ethylenebutylene polymer. Many other diblock and triblock candidates are known, such as poly(aromatic amide)-siloxane, polyimide-siloxane, and polyurethane. SBS and hydrogenated SBS (i.e., SEBS) are well-known products from Kraton Business Group (Kraton® ), Phillips Petroleum (K-resin® , and BASF (Styrolux® ).

The reactive plasticizer may encompass monomers, oligomeric or short polymeric reactants, or oligomeric or short polymeric crosslinkers, or macromeric reactants or macromeric crosslinkers (collectively "macromers"). When mixed with a dead polymer, the reactive plasticizer plasticizes the dead polymer to give a composition having the desired consistency at ambient temperature or below (i.e., able to maintain a shape for easy handling over short time periods), and at the processing temperature (i.e., malleable enough to be compressed or formed into a desired shape). The said processing temperature can be chosen conveniently to be moderately above or below ambient temperature.

When used without a dead polymer or with only a small amount of dead polymer, the reactive plasticizer should be a reactive monomer, a reactive oligomer or a reactive short polymer, or mixtures thereof, having at least one reactive functional group. In this case, the reactive plasticizer should be a longer chain molecule, of from about 1 to about 1000 repeat units, and preferably between about 1 and about 100 repeat units. These reactive plasticizers (or mixture of reactive plasticizers) have a high viscosity, preferably of greater than 1000 centipoise, at the temperature at which the material is to be handled (e.g., inserted into a mold cavity) to exhibit semi-solid behavior. In the case of low molecular weight reactive plasticizers, the mixture may first be slightly polymerized to create the semi-solid consistency required for downstream processing as disclosed in this invention. Alternatively, the mixture may be cooled to create the semi-solid consistency.

The reactive plasticizers can be mixtures themselves, and composed of mono-functional, bi-functional or multi-functional entities.

In total, the amount and composition of the reactive plasticizer(s) in the resulting formulation are such that the formulation is semi-solid-like and can be effectively handled with no need for a gasket in the mold. That is, the reactive plasticizer is present in a concentration sufficient to allow malleability and moldability at the desired processing temperature and pressure; however, the mixture is non-dripping and not free-flowing over short time periods at the material storage temperature and mold closure temperature, which can be conveniently chosen to be at ambient temperature, or slightly above or below. The amount of reactive plasticizer(s) is generally about 0.1% to about 100% by weight, preferably from about 1% to about 50%, more preferably from about 3% to about 25%. When the reactive plasticizer is an oligomeric or short polymeric reactant or crosslinker, the amount of reactive plasticizer may, preferably, be from about 50% to 100% by weight, more preferably from about 75% to 100% by weight.

The types and relative amounts of reactive plasticizer and dead polymer will dictate the time-and temperature-dependent visco-elastic properties of the mixture. The visco-elastic properties of the chosen compositions may be wide and varied. For the practice of the invention as disclosed herein, it is only required that the composition be highly viscous, semi-solid or solid-like for handling and/or insertion into a mold assembly at some temperature, while being semi-solid or liquid-like (i.e., deformable) at the processing temperature to which the mold assembly is heated or cooled after closure. Since virtually all known material systems become more compliant upon heating, the molding temperature will usually, but not necessarily, be equal to or higher than the handling temperature. In principle, any reactive plasticizer system (with or without dead polymer) which can be handled as a semi-solid or solid at some temperature, and which can be made to conform to a desired geometry (with or without changing the temperature and/or using force), can be used in the practice of the invention.

The semi-solid polymerizable material can be pre-formed into a slab or disk or other convenient or desirable shape. For example, the discharge of the material from a mixing device can be sliced (at low temperature if necessary) or squeezed into flat disks, slabs or sheets, which may in turn be pressed between mold halves to define a lens or other object without an intervening gasket. Alternatively, discrete globs of the discharge can be pressed into molds having the approximate shape of the ultimate object. A glob of this composition can be applied at slightly elevated temperature on one side of a mold cavity. The other mold half is then brought into contact with the semi-solidified mass, which is squeezed into the desired shape by the approaching mold halves. Again, there is no need for gasketing of the mold halves, as the composition will not leak out of the mold due to its viscous semi-solid-like nature (except that which is squeezed out in clamping the mold shut). Furthermore, the shaped mass may be kept at a lightly elevated temperature after mold closure to anneal away the stresses (birefringence), if any, introduced by squeezing. The resulting pre-form units (whether slabs, disks, sheets, or other molded objects, for example) are cooled, without curing or with only slight or partial curing, for storage after slicing, squeezing or pressing.

If a semi-solid material is used immediately after mixing, thermal heating may be required to reduce the viscosity of the material. Due to the semi-solid nature, it may be difficult to produce defect-free articles without exerting a pressure. Thus, it is preferred that a pre-form is to be produced, which may have the shape and dimension of the front layer or the back layer. Conventional polymer processing techniques, such as injection molding, compression molding, transfer molding and vacuum forming may be used to make the pre-form.

The semi-solid polymerizable material may be formulated to be rubbery, flexible, hard, impact-resistant, scratch-resistant, etc., as desired for the chosen composite article configuration.

By coating or exposing the semi-solid pre-form to additional surface-forming or surface-modifying materials prior to polymerization, a gradient material may be formed, as disclosed in PCT Publication No. WO 00/55653. Alternatively, a surface-modifying material may be added onto a liquid resin layer by methods known in the art. In this manner, a rubbery or flexible "layer" or region may be incorporated specifically at the interface between the two layers of the article, for example. Such a gradient material may be used, for example, to accommodate and relieve any residual stress between the cured layers, yielding a composite article with materials that are strongly bound to each other and not prone to delamination. Likewise, the liquid resin layer or the semi-solid pre-form may be altered such that the final product is rendered hard or scratch-resistant near and at any outer surface by absorbing or otherwise applying or adding a surface-modifying composition containing a scratch-resistant material to such regions or areas of the pre-form where altered properties are desired. In another example, the surface composition may be a dye or pigment solution, which dye or pigment may be, for purposes of illustration, fluorescent, UV-absorbing, or visible (color).

The semi-solid polymerizable material may be exposed to the surface-forming/modifying compositions by dipping the semi-solid into a bath of the surface material. Or, the surface materials may be vaporized on, painted on, sprayed on, spun on, printed on, or transferred onto the semi-solid pre-forms by processes known to those skilled in the art of coating and pattern creation/transfer. Alternatively, the surface-forming/modifying composition may be sprayed, painted, printed, patterned, flow-coated, or otherwise applied to one or more mold surfaces that are then contacted with the semi-solid material, with optional curing or partial curing of the surface-modifying material prior to the molding step. Certain of the surface-forming or surface-modifying compositions may absorb or flow into the loose sponge-like architecture of the uncured or partially cured semi-solid pre-form and are subsequently trapped within the resulting tight, polymerized network when the semi-solid composition is cured completely. In other instances, the surface-forming/modifying composition is itself polymerizable and forms an interpenetrating polymer network structure with the semi-solid pre-form when the two compositions are cured. In either case, the surface treatment is locked in, either chemically, physically, or both, giving a final product where the surface and the interior compositions of the cured resin layer are different and yet the surface and the interior are integral and monolithic.

Surface-forming materials for the purpose of scratch resistance enhancement can be selected from multi-functional crosslinkers that are compatible with the reactive plasticizers of the semi-solid polymerizable composition, so that they will react together to form the monolithic final product. By "compatible" in this sense is meant that the surface formulation may preferably inter-react with the reactive groups present in the semi-solid composition. Formulations used for imparting scratch resistance will often consist of one or more highly functional (i.e., functionality equal to or greater than 3) reactive species. Polymerization of such highly functional species in the near-surface region of the composite article will produce a tightly crosslinked, scratch-resistant outer layer that is monolithically integrated with the cured resin layer. Examples of such crosslinkers include, but are not limited to, triacrylates and tetraacrylates, and the ethoxylated or propoxylated versions of these multi-functional acrylates. Occluded nano-particles in the surface formulation can also impart exceptional scratch resistance. Those skilled in the art of nano-composites can readily adapt the present invention for use with the nano-composite literature.

Dyes useful as the surface-modifying composition are known to those of skill in the art. The dyes may themselves possess reactive groups that chemically lock them into the near-surface region of the object, or the dyes may be entirely inert. In the latter case, the dyes will be held in the surface region of the object by the densely crosslinked network surrounding the dye molecules after polymerization. The process of the present invention allows the choice of dyes for tinting to be greatly expanded over that of the prior art methods. Dyes sensitive to thermal degradation may be utilized as the surface-forming composition, as may dyes that dissolve in organic media. Many commercially available dyes from sources such as Ciba Geigy, Aldrich, BASF, DuPont, etc., are soluble in organic media. Aqueous-phase soluble dyes are also possible candidates for this invention by using surface formulations that are polar or charged, or simply by dissolving the dyes in an inert, polar media (e.g., water, ethanol, ethylene glycol, acetone, etc.), which facilitates their uptake into the article prior to cure.

Low refractive-index monomers and crosslinkers may be used as the surface-forming composition to provide, for example, low reflectivity (for anti-glare applications, for example). Such compositions include vinyl or (meth)acrylated silicones, as well as perfluorinated or partially fluorinated acrylates and methacrylates and vinyl ethers, such as for example vinyl trifluoroacetate, trifluoroethyl acrylate, pentadecafluorooctyl acrylate, hexafluorobutyl methacrylate, perfluoroethyleneglycol diacrylate, and the like. These perfluorinated compounds may also enhance mold-release properties of the final product, as do silicone acrylates.

Anti-static monomers or inert additives may be used as the surface-forming composition to provide anti-static-charge surfaces in the composite lens. The anti-static surfaces minimize the collection of dust particles, increasing optical transmission and clarity and decreasing the need and frequency of cleanings. Reactive and inert anti-static additives are well known and well enumerated in the literature. Hydrophobic monomers and/or hydrophilic monomers may be used as an anti-fogging surface-modifying material.

Heterofunctional additives may be used as the surface-forming composition for incorporation into the near-surface region of the semi-solid composite article. These heterfunctional additives may then serve as future reactive sites or as adhesion promoters for subsequent films or coatings. For example, mono-acrylated epoxies, hydroxyacrylates, amino-vinyl ethers, or vinyl anhydrides may be chemically incorporated into the surface region(s) of the composite article by reaction of the vinyl groups. The epoxy, hydroxy, amino, or anhydride groups may then be used to capture, react with, and/or promote adhesion of subsequent films or coatings using chemical reactions other than the vinyl-based polymerization.

The material for the photochromic front layer may be either a liquid resin or a semi-solid material. Liquid photochromic resins are commercially available, such as Sun Sensor® sold by Corning Corporation, or they can be formulated specifically. A prerequisite is that a liquid resin comprising a monomer and photochromic dye must preserve the photochromic property after the cure reaction. Likewise, a semi-solid polymerizable material may be blended and mixed with a photochromic dye; or the dye can be introduced into the semi-solid through monomers. Blending and mixing may be conducted by an internal mixer, a twin extruder, or the like. In general, photochromic dyes have limited solubility in polymers; therefore, uniform distribution may be difficult to achieve. Such a problem can be overcome by first dissolving the photochromic dye into a proper monomer. The resulting reactive photochromic solution is then introduced into the polymer through either solvation or mixing. Such a polymer, monomer and dye composition should be chosen to preserve the photochromic property after the cure reaction and achieve optimal photochromic performance.

The photochromic dye can be selected from the general classes of spiroxazines, spiropyrans and chromenes with desired photochromic properties. A large number of photochromic dyes have been described in the literature and are commercially available. Examples of spiroxazine dyes include those notably in U.S. Pat. Nos. 3,562,172, 4,215,010, 4,986,934, 5,180,524, 5,233,038 and 6,004,486. Some of the spiropyran dyes are given in U.S. Pat. Nos. 4,287,337, 4,826,977, 5,241,075, 5,520,853 and 5,604,280. Usable chromenes have been described in U.S. Pat. Nos. 4,889,413, 5,066,818, 5,200,116, among others. Photochromic dyes which may be mixed with a liquid resin are also discussed in the following references: "Organic Photochromes", A.V. Elstsov, ed., Consultants Bureau Publishers, New York and London, 1990; "Physics and Chemistry of Photochromic Glasses", A.V. Dotsenko et al., CRC Press, Baton Rouge and New York, 1998; "Photo-Reactive Materials for Ultrahigh Density Optical Memory", M. Ire, ed., Elsevier, Amsterdam and New York, 1994. The dyes may themselves possess reactive groups that may react with monomer(s) or oligomer(s) in the liquid resin, or the dyes may be entirely inert.

Any UV or thermal free-radical initiator known to those skilled in the art for free-radical polymerization can be added to the liquid resin or semi-solid polymerizable material to initiate the polymerization process. Mixtures of initiators are sometimes preferred since they can in certain cases provide a more efficient production of radicals. The initiator should, preferably, have a broad absorption spectrum if it is a UV initiator, have good cure efficiency, and be non-yellowing. Examples such as the Irgacure and Darocur series are well-known and commercially available from Ciba Geigy, as is the Escacure series from Sartomer. Thermal initiators such as azobisisobutyronitrile (AIBN), benzoyl peroxide, dicumy peroxide, 5-butyl hydroperoxide, potassium persulfate, and ammonium persulfate are also well known and are available from chemical supplier such as Aldrich. For a reference on initiators, see, for example, "Polymer Handbook", J. Brandrup, E.H. Immergut, eds., 3^{rd} Ed., Wiley, New York, 1989.

Optionally, other additives well-known in the art may be added in small amounts to the liquid resin or the semi-solid polymerizable material for either the front or the back layer, such as mold release agents to facilitate removal of the object from the mold after curing, non-reactive conventional plasticizers or flexibilizers, pigments, dyes, organic or inorganic fibrous or particulate reinforcing or extending fillers, thixotropic agents, indicators, inhibitors or stabilizers (weathering or non-yellowing) agents, UV absorbers, surfactants, flow aids, chain transfer agents, anti-reflective agents, scratch-resistant additives, and the like.

Ultraviolet curing is typically achieved in connection with an ultraviolet energy source. In principle, any ultraviolet light source may be used to initiate the free-radical polymerization or crosslinking reaction. However, in order to minimize the degradation of photochromic dye, it is preferred that the UV radiation does not focus on the short wavelength, high-energy region. The UV intensity and exposure time should also be carefully controlled. Ultraviolet curing can also be performed using a "blinking" ultraviolet light source. Curing with a blinking UV light may produce an optical object with less variation in consistency. An alternative may be to use a photo-initiator, which can be activated by visible light so that UV radiation can be avoided. In cases where thermal cure is desired, a heating oven or bath may be used to polymerize or cure the articles to a predetermined extent.

A first method comprises (i) selecting a front mold having a desired surface geometry, a gasket (when necessary) and optionally, a back mold to form a mold assembly as known to those in the art; (ii) injecting or otherwise placing a front layer material with photochromic dye into the mold cavity to form a photochromic resin layer with a predetermined thickness; (iii) polymerizing or curing the photochromic resin to a viscous or semi-solid state, if necessary or desired; (iv) removing the back mold, if present; (v) adding a back layer material free of photochromic dye on top of the first layer up to the desired thickness; (vi) placing a subsequent back mold having a desired surface geometry on top of the second layer of resin; and (viii) curing the article by exposure to a source of polymerizing energy, such as UV radiation or thermal heating, or a combination of both. When the layer material is a semi-solid polymerizable material, it is desirable to compress the mold, with optional heating, so that the semi-solid material takes on the shape of the internal cavity of the mold.

It is preferred that the resin of the front layer is in a highly viscous or semi-solid state when the resin of the back layer is added in order to reduce diffusion and migration of the photochromic dye. This can be achieved by use of a semi-solid polymerizable material. Alternatively, if a liquid resin is used, a simple approach is to pre-polymerize the liquid resin for the front layer to a high viscosity before mold filling. The injection of this resin may be carried out at an elevated temperature to reduce its viscosity. After the resin in the front layer is cooled down, its high viscosity will effectively limit the diffusion and migration of the photochromic dye into the back layer. Another approach is to polymerize or cure the liquid resin partially in the mold so that it becomes a highly viscous liquid, a gel, or semi-solid material. In general, UV curing is preferred for its simplicity and efficiency. The curing time may be within 10 - 600 seconds, or preferably within 10-120 seconds, or more preferably within 10 - 30 seconds. The unique feature of the first approach is that no polymerization or curing is required to the front layer before adding the second layer of resin. On the other hand, the second approach eliminates the specific pre-polymerization step for the first resin. When the front layer is made of the semi-solid polymerizable material, UV or thermal curing is not necessary since the material itself has high enough viscosity so that the diffusion and migration of a photochromic dye will be limited.

Another method employs an interface layer between the front and the back layers. The first step is to form the front layer material with the photochromic dye, constrained by the front mold and a gasket, as necessary. Subsequently, a thin resin layer is formed on top of the front layer. In the next step, the back layer material is added along with the back mold. The assembly is then cured completely.

It is beneficial to have a thin interface layer for a number of reasons. First of all, the interface layer provides flexibility on both formulation and curing. Secondly, the interface layer may function as a barrier layer to limit the diffusion and migration of the photochromic dye. Finally, such a layer may be able to provide better bonding and adhesion of the front and back layers. As discussed earlier herein, a liquid resin or a semi-solid polymerizable material can be used for the front and back layers, with the proviso that at least one of the layers is a semi-solid polymerizable material.

For certain resin/photochromic dye compositions, UV curing may damage or even kill the photochromic properties. There are two possible mechanisms for dye inactivity. One is the dye degradation because of UV radiation, another is due to the interaction between the dye and the photo initiator(s). Since the interface layer is free of photochromic dye, it can be formulated to have a UV initiator and subsequently, be polymerized or cured to a viscous or semi-solid state. In this case, it is not necessary to have a UV initiator in the resin for the front layer. Moreover, the flexibility in formulation and curing provides means to improve bonding and adhesion since material tailoring may be utilized.

In another method, a back mold is assembled with a gasket, if necessary, and a back layer material of a liquid resin or a semi-solid polymerizable material, which is substantially free of photochromic additives, is added into the cavity. A front mold may optionally be included in the mold assembly, if desired. If the material is a liquid, it is then cured to the extent that its viscosity is high enough that a free flow will not occur. If the material is a semi-solid polymerizable material, it may optionally be compressed between the molds to take on the shape of the internal mold cavity. The front mold, if present, is removed. Another, appropriate front mold is selected and a gasket, if required, is arranged. Subsequently, a front layer material containing a photochromic dye is loaded in the cavity formed by the front mold and gasket, and the back mold with the nonphotochromic back layer material is then turned over and pressed against the front layer material containing photochromic dye; the entire part is then cured to form a finished composite photochromic article.

It may be appreciated that the three aforementioned methods can produce photochromic articles inexpensively since there is only one layer of resin containing photochromic dye. Additionally, the process is quick and continuous since there is no need to reassemble the mold cavity during the process.

In another method, each of the front and back layers is prepared separately. A mold assembly is assembled comprising a front mold, a gasket as necessary, and a back mold for each of the front and back layers. The mold assembly for the front layer will have a front mold in the desired geometry of the final article, while the mold assembly for the back layer will have a back mold in the desired geometry of the final article. The material for each of the front and back layers can be either a liquid resin or a semi-solid polymerizable material, but at least one of them must be a semi-solid polymerizable material. Each of the layers is produced, with compression and optional heat or with partial curing, as necessary. Then the back mold is removed from the front layer containing active photochromic additives, the front mold is removed from the back layer, the materials in the layers are brought into contact, and the resulting mold assembly (front mold with front layer material and back mold with back layer material) is compressed at ambient or elevated temperatures. Finally, the whole part is cured to produce the finished composite photochromic article.

Ideally, optimum filling and curing conditions should be applied so that the front and back material layers bond together seamlessly and no visible phase boundary can be discerned. It is necessary to allow a spontaneous local mixing caused by the diffusion of monomer to achieve a good bonding between layers and to eliminate visible defects at the interface. However, excessive mixing would result in a significant diffusion of photochromic compounds from the layer containing them, which may be the case if one uses uncured liquid resins. By using semi-solid polymerizable materials or partially cured liquid resins that are highly viscous, the present invention still allows some diffusion of monomer around the interface while suppressing significant loss of photochromic compounds from the layer that contains them. Therefore, good bonding can be achieved and no visible defects are observed at the interface.

### EXAMPLES

### Example 1. Photochromic Semi-solid Pre-form

Photochromic dye (e.g., "Thunderstorm Purple" from James Robinson) was dissolved at 1 wt% concentration in the reactive plasticizer benzyl acrylate. The resulting dye solution was filtered to remove any macro-particles.

About 0.1 g of the dye solution was added to a scintillation vial already containing 0.1 g benzyl acrylate, 0.2 g trimethylolpropane triacrylate, and 0.006 g Irgacure 819 as a photoinitiator, and was stirred to disperse the dye throughout the mixture. 1.6 grams of K-Resin KR03-NW were added to the vial, and the mixture was stirred such that all the polymer particles were covered with the reactive plasticizers. The final composition in the vial was: 80 wt% polymer, 20 wt% reactive plasticizer, with the dye present at 0.05 wt% of the total weight. The vial was then capped and placed in an oven at 70°C and left for a few days to one week in order to allow for the plasticizers to solvate the polymer. If necessary, several vials were prepared in this manner.

After this period, the mixture was removed from the vial and homogenized by hand mixing between a pair of quartz glass plates on a hot plate at about 150 °C. After the mixture was homogenized, approximately 1.3 g of material was pressed between a pair of quartz glass plates into a disk measuring approximately 4 cm diameter and 1 mm thickness.

### Example 2. Photochromic-free Semi-solid Pre-form

A photochromic-free semi-solid pre-form was prepared in the manner described in Example 1, except photochromic dye was not added to the reactive plasticizer and the thickness of the pre-form disk was approximately 5 mm.

### Example 3. A Photochromic Composite Article from Semi-solid Front and Back Layers

The disk-shaped semi-solid pre-form from Example 1 was used as a photochromic front layer of a composite article. The disk-shaped semi-solid pre-form from Example 2 was used as a back layer. The front and back layers were combined and placed between a pair of quartz glass plates on a hot plate at about 150°C. While the pre-form softened due to the heat provided by the hot plate, slight positive pressure was applied to the glass plates to achieve good adhesion of layers. The mold assembly was then placed on another hot plate set to approximately 90°C and cured with a high intensity white light for about 20 min, during which time the semi-solid hardened. The cured resin was then separated from the glass plates, yielding a photochromic composite article made from semi-solid pre-forms.

### Example 4. Photochromic Liquid Resin Layer + Semi-solid Layer

6.5 g. of Corning Sun Sensor® resin was mixed with 0.02 g. of Irgacure 819. The mixture was transferred into a front lens mold half. A semi-solid lens pre-form (which may be selected from those disclosed and prepared as in International Publication WO 00/17675, the disclosure of which is incorporated by reference herein), free of photochromic dye, was placed on top of the liquid resin. The assembly was then cured by high intensity visible light source (Fiber-Lite Ringlight System, Dolan-Jenner) for 20 minutes. After removing the lens mold, an integral photochromic lens was obtained. The thickness of photochromic front layer was approximately 1.5 mm.

### Example 5. Photochromic Lens with Interface Layer

A thin layer of liquid resin, approximately 100 □m, was placed on the surface of a clear semi-solid lens pre-form (such as those from Example 4). The resin is a mixture of 80% ethylene glycol dimethacrylate, 20% benzyl methacrylate and 0.35% photo-initiator, Darocur 1173. Subsequently, the liquid resin was partially cured for 10 seconds under Fusion UV lamp. Next, 5.4 g. of Corning Sun Sensor resin and 0.018 g. of Irgacure 819 was mixed together and the material was poured into a front lens mold half. The semi-solid lens pre-form was placed on top of the liquid resin with the thin partially polymerized layer in contact with the photochromic liquid resin. The assembly was cured by high intensity illumination source. The resulting photochromic lens exhibits better bonding due to the interface layer.

### Example 6. Photochromic Layer between Two Semi-solid Layers

A 0.25 mm semi-solid layer was pressed against a front lens mold. Next, a photochromic resin was prepared by mixing 80% ethylene glycol dimethacrylate, 20% benzyl methacrylate and 0.3% Irgacure 819 with 0.95% Reversacol 195 photochromic material (James Robinson Ltd.). 5.2 g. of the photochromic resin was placed between the thin semi-solid layer and a semi-solid pre-form (such as those from Example 4). The assembly was heated at 85°C and pressed to desired geometry. Finally, it was cured under visible light source for 20 minutes.

### Example 7. Thermal Curing of Photochromic Liquid Resin Layer

6.25 g. of Corning Sun Sensor resin was mixed with 0.031 g. azobisisobutyronitrile (AIBN). The mixture was transferred into a front lens mold half. A semi-solid lens pre-form (such as those from Example 4) was placed on top of the liquid resin. The assembly was placed in a heated oven. The curing procedure comprised 12 hours at 65°C, 2 hours at 80°C, 2 hours at 100°C and finally 1 hour at 115°C. The resulting lens exhibits outstanding photochromic responses.

### Example 8. Thermal Curing with Interface Layer

A thin layer of liquid resin, approximately 200 □m, was placed on the surface of a semi-solid lens pre-form (such as those from Example 4). The resin is a mixture of 80% ethylene glycol dimethacrylate, 20% benzyl methacrylate and 0.45% Irgacure 184. Subsequently, the liquid resin was partially cured for 15 seconds under Fusion UV source. Next, 5.85 g. of Corning Sun Sensor resin with 0.028 g. AIBN was poured into a front lens mold half. The semi-solid lens pre-form was placed on top of the liquid resin with the thin layer in contact with photochromic liquid resin. The assembly was placed in a heated oven. The curing procedure comprised 12 hours at 65°C, 2 hours at 80°C, 2 hours at 100°C and finally 1 hour at 115°C. The resulting lens possesses improved interface bonding, besides outstanding photochromic responses.

## Claims

1. A composite photochromic article comprising at least two cured resin layers bonded to each other, wherein at least one of the layers is loaded with a photochromic dye, and wherein at least one of the layers comprises a reactive plasticizer and a dead polymer, a dead polymer being a generally non-reactive polymer that is at least 95% polymerized.

2. The composite photochromic article of claim 1 wherein the dead polymer is selected from the group consisting of thermoplastics, thermosets, thermoplastic elastomers, and high-performance engineering thermoplastics.

3. The composite photochromic article of claim 1 or 2 wherein the cured resin layers form an integral monolithic entity.

4. The composite photochromic article of any one of claims 1 to 3 wherein one resin layer is formed from a semi-solid polymerizable material and the other resin layer is formed from a liquid resin.

5. The composite photochromic article of claim 4 wherein the resin layer formed from a liquid resin is loaded with the photochromic dye.

6. The composite photochromic article of claim 4 wherein the resin layer formed from a semi-solid polymerizable material is loaded with the photochromic dye.

7. The composite article of any one of claims 1 to 3 wherein both resin layers are formed from semi-solid polymerizable materials.

8. The composite photochromic article of any one of claims 1 to 7 further comprising a surface-modifying material on the surface of at least one of the cured resin layers, the surface-modifying material having a composition that differs from that of the cured resin layer on whose surface the material resides.

9. The composite photochromic article of claim 8 wherein the surface-modifying material is selected from the group consisting of a dye, a pigment, a low-refractive index material, an anti-static material, an anti-fogging material, heterofunctional additives and a material that imparts scratch resistance.

10. The composite photochromic article of any one of claims 1 to 9 wherein the layer containing the photochromic dye has an edge thickness of from 0.1 mm to 5 mm.

11. A method for molding a photochromic article which is formed from two or more layered sections; said method comprising:
using a mold having first and second mold halves, loading said first mold half with a first material;
placing a second material in contact with said first material, wherein at least one of said first and second materials contains a photochromic dye and at least one of said first and second materials is a semi-solid polymerizable material including a reactive plasticizer and a dead polymer, a dead polymer being a generally non-reactive polymer that is at least 95% polymerized, before being placed in said mold;
with said first and second mold halves closed to form a mold cavity, curing said first and second materials in said mold cavity to form an integral composite article.

12. A method according to claim 11 wherein said first material is a liquid resin and said method further comprises partially curing said first material in said first mold half prior to placing said second material in contact with said first material.

13. A method according to claim 11 wherein said first material is a liquid resin and said second material is a semi-solid polymerizable material, and said second material is placed in contact with said first material prior to closing said first and second mold halves to form said cavity, and said method further comprises compressing said mold to cause said second material to fill said mold cavity.

14. A method according to claim 11 wherein said first and second materials are both semi-solid polymerizable materials and, with said first and second mold halves closed to form a mold cavity, said method further comprises compressing said mold to cause said semi-solid polymerizable materials to fill said mold cavity.

15. A method according to claim 11 wherein said first material is a semi-solid polymerizable material and said second material is a liquid resin, and said method further comprises first closing said first and second mold halves over said first material and compressing said first and second mold halves to cause said first material to fill said mold cavity, then changing said second mold half to form a subsequent mold cavity defined by said changed second mold half and an exposed surface to said first material, and filling said subsequent mold cavity with said second material prior to curing said first and second materials.

16. A method according to any one of claims 13 to 15 wherein the semi-solid polymerizable material is a pre-form.

17. A method according to any one of claims 11 to 16 wherein the dead polymer is selected from the group consisting of thermoplastics, thermosets, thermoplastic elastomers, and high performance engineering thermoplastics.

18. A method according to any one of claims 13 to 17 wherein said semi-solid polymerizable material exhibits low shrinkage upon cure.

19. A method according to any one of claims 11 to 18 wherein said first material is loaded with a photochromic dye.

20. A method according to any one of claims 1 to 18 therein said second material is loaded with a photochromic dye.

21. A method according to any one of claims 11 to 20 wherein the layer loaded with photochromic dye has an edge thickness of from 0.1 mm to 10 mm.

## Patentansprüche

1. Photochromatischer Verbundartikel, umfassend mindestens zwei gehärtete aneinander gebundene Harzschichten, wobei mindestens eine der Schichten mit einem photochromatischen Farbstoff beladen ist, und wobei mindestens eine der Schichten einen reaktiven Weichmacher und ein totes Polymer umfasst, wobei ein totes Polymer ein im Allgemeinen nicht-reaktives Polymer ist, das zu mindestens 95 % polymerisiert ist.

2. Photochromatischer Verbundartikel von Anspruch 1, wobei das tote Polymer aus der Gruppe gewählt wird, die aus Thermoplasten, wärmehärtbaren Kunststoffen, thermoplastischen Elastomeren und technischen Hochleistungs-Thermoplasten besteht.

3. Photochromatischer Verbundartikel von Anspruch 1 oder 2, wobei die gehärteten Harzschichten eine integrale monolithische Einheit bilden.

4. Photochromatischer Verbundartikel von mindestens einem der Ansprüche 1 bis 3, wobei eine Harzschicht aus einem halbfesten polymerisierbaren Material gebildet ist und die andere Harzschicht aus einem flüssigen Harz gebildet ist.

5. Photochromatischer Verbundartikel von Anspruch 4, wobei die aus einem flüssigen Harz gebildete Harzschicht mit dem photochromatischen Farbstoff beladen ist.

6. Photochromatischer Verbundartikel von Anspruch 4, wobei die aus einem halbfesten polymerisierbaren Material gebildete Harzschicht mit dem photochromatischen Farbstoff beladen ist.

7. Verbundartikel von mindestens einem der Ansprüche 1 bis 3, wobei beide Harzschichten aus halbfesten polymerisierbaren Materialien gebildet sind.

8. Photochromatischer Verbundartikel von mindestens einem der Ansprüche 1 bis 7, ferner umfassend ein Oberflächen-modifizierendes Material auf der Oberfläche von mindestens einer der gehärteten Harzschichten, wobei das Oberflächen-modifizierende Material eine Zusammensetzung aufweist, welche von derjenigen der gehärteten Harzschicht, auf deren Oberfläche das Material befindlich ist, verschieden ist.

9. Photochromatischer Verbundartikel von Anspruch 8, wobei das Oberflächen-modifizierende Material aus der Gruppe gewählt ist, welche aus einem Farbstoff, einem Pigment, einem Material mit niedrigem Brechungsindex, einem antistatischen Material, einem Beschlagverhinderungs- bzw. Antischleiermaterial, heterofunktionellen Additiven und einem Material, das Kratzfestigkeit vermittelt, besteht.

10. Photochromatischer Verbundartikel von mindestens einem der Ansprüche 1 bis 9, wobei die Schicht, welche den photochromatischen Farbstoff enthält, eine Kantendicke von 0,1 mm bis 5 mm aufweist.

11. Verfahren zur Formung eines photochromatischen Artikels, der aus zwei oder mehr geschichteten Abschnitten gebildet wird, wobei das Verfahren folgendes umfasst:
Verwenden einer Form mit einer ersten und zweiten Formhälfte, Beladen der ersten Formhälfte mit einem ersten Material;
Inkontaktbringen eines zweiten Materials mit dem ersten Material, wobei mindestens eines des ersten und zweiten Materials einen photochromatischen Farbstoff enthält und mindestens eines des ersten und zweiten Materials ein halbfestes polymerisierbares Material, einschließend einen reaktiven Weichmacher und ein totes Polymer, ist, wobei ein totes Polymer ein im Allgemeinen nicht-reaktives Polymer ist, das zu mindestens 95 % polymerisiert ist, vor dem Einbringen in die Form;
nach dem Schließen der ersten und zweiten Formhälfte unter Erzeugung einer Formhöhlung Härten des ersten und zweiten Materials in der Formhöhlung zur Bildung eines integralen Verbundartikels.

12. Verfahren gemäß Anspruch 11, wobei das erste Material ein flüssiges Harz ist und das Verfahren ferner das teilweise Härten des ersten Materials in der ersten Formhälfte vor dem Inkontaktbringen des zweiten Materials mit dem ersten Material umfasst.

13. Verfahren gemäß Anspruch 11, wobei das erste Material ein flüssiges Harz ist und das zweite Material ein halbfestes polymerisierbares Material ist, und das zweite Material vor dem Schließen der ersten und zweiten Formhälfte zur Erzeugung einer Formhöhlung mit dem ersten Material in Kontakt gebracht wird, und das Verfahren ferner das Pressen der Form umfasst, um das zweite Material dazu zu bringen, die Formhöhlung zu füllen.

14. Verfahren gemäß Anspruch 11, wobei das erste und das zweite Material beide halbfeste polymerisierbare Materialien sind, und wobei das Verfahren nach Schließen der ersten und zweiten Formhälfte zur Erzeugung einer Formhöhlung ferner das Pressen der Form umfasst, um die halbfesten polymerisierbaren Materialien dazu zu bringen, die Formhöhlung zu füllen.

15. Verfahren gemäß Anspruch 11, wobei das erste Material ein halbfestes polymerisierbares Material ist und das zweite Material ein flüssiges Harz ist, und das Verfahren ferner zuerst das Schließen der ersten und zweiten Formhälfte über dem ersten Material und das Pressen der ersten und zweiten Formhälfte, um das erste Material dazu zu bringen, die Formhöhlung zu füllen, dann das Wechseln der zweiten Formhälfte unter Erzeugung einer nachfolgenden Formhöhlung, welche durch die ausgewechselte zweite Formhälfte und eine zum ersten Material exponierte Oberfläche definiert ist, und das Füllen der nachfolgenden Formungshöhle mit dem zweiten Material vor dem Härten der ersten und zweiten Materialien umfasst.

16. Verfahren gemäß mindestens einem der Ansprüche 13 bis 15, wobei das halbfeste polymerisierbare Material ein Vorformling ist.

17. Verfahren gemäß mindestens einem der Ansprüche 11 bis 16, wobei das tote Polymer aus der Gruppe gewählt wird, die aus Thermoplasten, wärmehärtbaren Kunststoffen, thermoplastischen Elastomeren und technischen Hochleistungs-Thermoplasten besteht.

18. Verfahren gemäß mindestens einem der Ansprüche 13 bis 17, wobei das halbfeste polymerisierbare Material eine geringe Schrumpfung nach dem Härten aufzeigt.

19. Verfahren gemäß mindestens einem der Ansprüche 11 bis 18, wobei das erste Material mit einem photochromatischen Farbstoff beladen ist.

20. Verfahren gemäß mindestens einem der Ansprüche 11 bis 18, wobei das zweite Material mit einem photochromatischen Farbstoff beladen ist.

21. Verfahren gemäß mindestens einem der Ansprüche 11 bis 20, wobei die mit photochromatischem Farbstoff beladene Schicht eine Kantendicke von 0,1 mm bis 10 mm aufweist.

## Revendications

1. Article photochromique composite comprenant au moins deux couches de résine polymérisée liées l'une à l'autre, dans lequel l'une des couches au moins est chargée avec un colorant photochromique et dans lequel l'une des couches au moins comprend un plastifiant réactif et un polymère mort, un polymère mort étant un polymère généralement non réactif qui est polymérisé à au moins 95%.

2. Article photochromique composite selon la revendication 1, dans lequel le polymère mort est choisi dans le groupe constitué par des thermoplastiques, des thermodurcissables, des élastomères thermoplastiques et des thermoplastiques techniques hautes performances.

3. Article photochromique composite selon la revendication 1 ou la revendication 2, dans lequel les couches de résine polymérisées forment une entité monolithique d'un seul tenant.

4. Article photochromique composite selon l'une quelconque des revendications 1 à 3, dans lequel une couche de résine est formée à partir d'un matériau polymérisable semi-solide et l'autre couche de résine est formée à partir d'une résine liquide.

5. Article photochromique composite selon la revendication 4, dans lequel la couche de résine formée à partir d'une résine liquide est chargée avec le colorant photochromique.

6. Article photochromique composite selon la revendication 4, dans lequel la couche de résine formée à partir d'un matériau polymérisable semi-solide est chargée avec le colorant photochromique.

7. Article composite selon l'une quelconque des revendications 1 à 3, dans lequel les deux couches de résine sont formées à partir de matériaux polymérisables semi-solides.

8. Article photochromique composite selon l'une quelconque des revendications 1 à 7, comprenant en plus un matériau modificateur de surface sur la surface de l'une au moins des couches de résine polymérisée, le matériau modificateur de surface ayant une composition qui diffère de celle de la couche de résine polymérisée sur la surface de laquelle le matériau est présent.

9. Article photochromique composite selon la revendication 8, dans lequel le matériau modificateur de surface est choisi dans le groupe constitué par un colorant, un pigment, un matériau à faible indice de réfraction, un matériau antistatique, un matériau antibuée, des additifs hétérofonctionnels et un matériau qui confère une résistance aux rayures.

10. Article photochromique composite selon l'une quelconque des revendications 1 à 9, dans lequel la couche contenant le colorant photochromique a une épaisseur de bord dans la plage de 0,1 mm à 5 mm.

11. Procédé de moulage d'un article photochromique qui est formé à partir de deux ou plusieurs sections stratifiées, ledit procédé comprenant les étapes consistant à :
utiliser un moule ayant une première et une deuxième moitié de moule et remplir ladite première moitié de moule avec un premier matériau ;
placer un deuxième matériau en contact avec ledit premier matériau, l'un au moins desdits premier et deuxième matériaux contenant un colorant photochromique et l'un au moins desdits premier et deuxième matériaux étant un matériau polymérisable semi-solide qui comprend un plastifiant réactif et un polymère mort, un polymère mort étant un polymère généralement non réactif qui est polymérisé à au moins 95%-avant d'être placé dans ledit moule ;
lesdites première et deuxième moitiés de moule étant fermées pour former une cavité de moule, et polymériser lesdits premier et deuxième matériaux dans ladite cavité de moule afin de former un article composite d'un seul tenant.

12. Procédé selon la revendication 11, dans lequel ledit premier matériau est une résine liquide et ledit procédé comprend en plus la polymérisation partielle dudit premier matériau dans ladite première moitié de moule avant de mettre ledit deuxième matériau en contact avec ledit premier matériau.

13. Procédé selon la revendication 11, dans lequel ledit premier matériau est une résine liquide et ledit deuxième matériau est un matériau polymérisable semi-solide et ledit deuxième matériau est mis en contact avec ledit premier matériau avant de fermer lesdites première et deuxième moitiés de moule afin de former ladite cavité, et ledit procédé comprend en plus la compression dudit moule afin que ledit deuxième matériau remplisse ladite cavité de moule.

14. Procédé selon la revendication 11, dans lequel lesdits premier et deuxième matériaux sont tous les deux des matériaux polymérisables semi-solides et, lesdites première et deuxième moitiés de moule étant fermées pour former une cavité de moule, ledit procédé comprend en plus la compression dudit moule afin que lesdits-matériaux polymérisables semi-solides remplissent ladite cavité de moule.

15. Procédé selon la revendication 11, dans lequel ledit premier matériau est un matériau polymérisable semi-solide et ledit deuxième matériau est une résine liquide et ledit procédé comprend en plus, tout d'abord, la fermeture desdites première et deuxième moitiés de moule sur ledit premier matériau et la compression desdites première et deuxième moitiés de moule afin que ledit premier matériau remplisse ladite cavité de moule, ensuite le changement de ladite deuxième moitié de moule afin de former une cavité de moule suivante définie par ladite deuxième moitié de moule changée et une surface exposée audit premier matériau, et le remplissage de ladite cavité de moule suivante avec ledit deuxième matériau avant de polymériser lesdits premier et deuxième matériaux.

16. Procédé selon l'une quelconque des revendications 13 à 15, dans lequel le matériau polymérisable semi-solide est une préforme.

17. Procédé selon l'une quelconque des revendications 11 à 16, dans lequel le polymère mort est choisi dans le groupe constitué par des thermoplastiques, des thermodurcissables, des élastomères thermoplastiques et des thermoplastiques techniques hautes performances.

18. Procédé selon l'une quelconque des revendications 13 à 17, dans lequel ledit matériau polymérisable semi-solide présente un faible retrait au cours de la polymérisation.

19. Procédé selon l'une quelconque des revendications 11 à 18, dans lequel ledit premier matériau est chargé avec un colorant photochromique.

20. Procédé selon l'une quelconque des revendications 11 à 18, dans lequel ledit deuxième matériau est chargé avec un colorant photochromique.

21. Procédé selon l'une quelconque des revendications 11 à 20, dans lequel la couche chargée avec un colorant photochromique a une épaisseur de bord dans la plage de 0,1 mm à 10 mm.
